# EUROPEAN PATENT APPLICATION

(11) **EP 0 981 038 A1**
(43) Date of publication of application: **23.02.2000**
(21) Application number: 98810802.3
(22) Date of filing: 19.08.1998
(51) Int. Cl.: G01D 3/02

(54) **Method for measuring at least one parameter and device for carrying out this method**

(71) Applicant: Teodorescu, Horia-Nicolai, 6600 Iasi (RO)
(72) Inventor: Teodorescu, Horia-Nicolai, 6600 Iasi (RO)
(74) Representative: Savoye, Jean-Paul

(57) **Abstract**

The method for measuring at least one parameter, comprises the steps of sensing said parameter with at least one sensing element (3), converting said sensed parameter into at least one other parameter corresponding to a parameter of a dynamical nonlinear system (1), applying said converted parameter to said dynamical nonlinear system (1) for generating a variable nonlinear dynamical regime of said dynamical nonlinear system (1), in relation to the change of said parameter, deriving relevant information on the parameter to be measured by a global characterization of said change of the dynamic regime of said dynamical nonlinear system (1) and converting the characterization of said change into a primary output signal.

## Description

The present invention refers to a new measuring method, to the related new class of measurement devices (briefly named ensors in what follows), operating as nonlinear sensors and based on nonlinear dynamic systems (nonlinear signal generators) and on one or several sensing elements either included as circuit elements inside the nonlinear systems or connected to the nonlinear systems such as to form a single nonlinear dynamic system.

The device output signal is either analogue or logic (binary or multilevel), according to the realization variant of the sensor. The sensors are devoted to a large range of applications, including industrial applications, virtual reality and multimedia, biomedical applications, and space applications.

There are known various measuring principles and various types of measuring systems and devices, based on sensing elements that convert the measured parameter into another parameter, that is afterwards measured by an appropriate system.

Such sensors have one or several disadvantages, for instance: they have a relatively low sensitivity, or they are not appropriate to measure more than one parameter at the same time, moreover most of them are unsuitable to perform detection, in a window or a multiple window detection, or
· they are expansive, or
· they are highly perturbed by external electromagnetic fields.

It has already been disclosed in RO-A-95-00903 a proximity detector based on a nonlinear signal generator.

The measurement principle and the corresponding non-linear sensors, according to the present invention, eliminate the above mentioned disadvantages by using a nonlinear dynamic system that basically operates in a chaotic dynamic regime, or that swings from a chaotic regime to a periodic or to a stable regime, or from one type of chaotic regime to another, and possibly one or more sensing elements included in the nonlinear system or connected to it, the operating regime of the said nonlinear dynamic system being modified by the measured parameter(s), the change in operating regime being determined by a regime characterization subsystem.

According to this invention, either the nonlinear dynamic system as a whole, or the discrete sensing elements connected inside it or to it and in conjunction with the nonlinear dynamic system are able to detect the changes of the measured parameter and to transform it into a change of a parameter that is representing a state parameter for the nonlinear dynamic system.

An object of the present invention concerns a method for measuring at least one parameter as set out in claim 1. Another object of this invention is a device for carrying out this method, according to claim 8.

The accompanying drawings illustrate, very schematically and only by way of example, several embodiments of the measuring device to carry out the method according to the present invention.

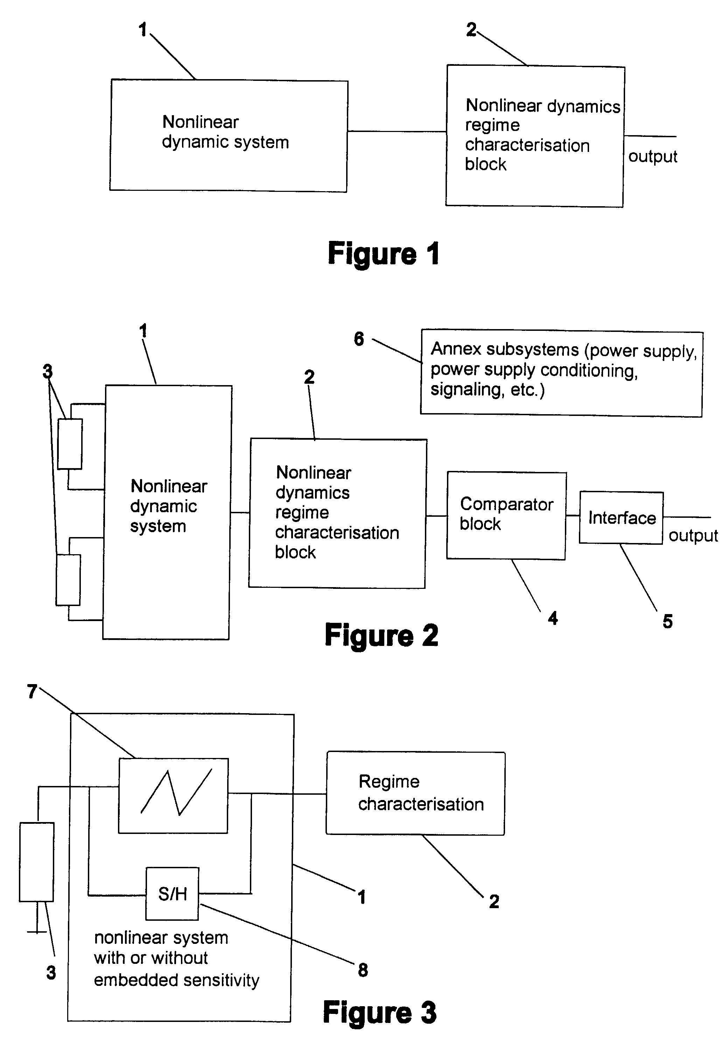

Figures 1-3 are block diagrams of these embodiments.

The basic block diagram of the nonlinear sensor, according to the invention, is presented in Figure 1, in a simplified, non-limiting realization example. The sensor basically includes the nonlinear dynamic system 1 and the behaviour characterization system 2 used to extract useful information from the signal obtained from the nonlinear system, by characterization of the nonlinear dynamics regime. The nonlinear dynamic system can be an electric system, or an optic system, or any other type of system with the desired nonlinear dynamic properties.

Figure 2 represents the basic block diagram of the sensor. The measurement principle, the operating principle, the structure and the details of the operating mode of such sensors for the case discrete sensing elements are used, according to this invention, are used in relation to Figure 2.

The operating regime of the nonlinear dynamic system 1 is modified by the external parameter or parameters to be measured (e.g., voltage, electric current, temperature, radiant energy, pressure etc.), either directly acting on the nonlinear dynamic system or by means of one or several sensing elements. For instance, the nonlinear dynamic system is an electric nonlinear circuit whose nonlinear input to output characteristic is modified by the power supply voltage, or by the ambient temperature, or the nonlinear dynamic system is a nonlinear optical system which operating regime is modified by temperature, or by pressure, etc. The instantaneous values of the output of the nonlinear dynamic system 1 are not directly informative on the value of the measured parameter, as they are influenced by the initial state of the system, by the moment of time the output value is read etc. To derive relevant information on the parameter to be measured, a global characterization of the dynamic behaviour has to be performed. This task is performed by the behaviour characterization system 2. The input to the subsystem 2 is one or several output signals, or one or several state-related signals, or a combination of the output and state-related signals of the nonlinear dynamic system 1. The operating regime characterization system 2 has appropriate memory capabilities, as well as either analogue or digital computation capability. The operating regime characterization system 2 can be any type of physical analogue signal processing system, or can be implemented by a digital system (computer etc.) and the appropriate software.

The operating regime characterization system determines the features of the nonlinear behaviour of the system 1. The characterization is performed either in a one-dimensional space, taking into account only one scalar state parameter of the system 1, or one scalar output of it, or the system 2 performs this task in a multi-dimensional space based on combinations of outputs and/or state-related parameters, in their dynamical evolution, as collected from the nonlinear dynamic system 1.

Non-limiting examples of the features that can be determined are: mean power at the output of the dynamic nonlinear system 1; various statistic parameters of one state parameter of the dynamic nonlinear system 1; average ratio of two state parameters of the dynamic nonlinear system 1; average value of the tangent to the curve described by the attractor of the nonlinear dynamic system 1, as represented in a classic phase diagram etc.

The measurement principle, the operating principle, the structure and the details of the operating mode of such sensors according to this invention, for the case discrete sensing elements are used, will be now explained in relation to Figure 2.

The sensor basically includes the nonlinear dynamic system 1, the sensing element or elements 3, and the operating regime characterization system 2 used to extract useful information from the signal obtained from the nonlinear dynamical system, and the sensing element or elements 3, when the sensing is not performed by the system as a whole.

The nonlinear sensor may also include, according to the invention, a comparator block 4 to produce a binary or a multi-level logic output. The nonlinear sensor may further include, an output interface 5, to adapt the sensor to the specific application. Moreover, the nonlinear sensor may include in addition various annex subsystems/circuitry 6, for instance power supply and power supply conditioning circuitry, signalling circuitry, thermal stabilizing subsystem etc.

According to the invention, the operation principle of the nonlinear sensors, in a realization version using discrete sensor elements 3, is as follows. The discrete sensing element or elements 3 convert the measured parameter (for instance, temperature, pressure, radiant energy etc.) into a parameter that represents a state parameter for the non-linear system. For instance, the new parameter can be voltage, electric resistance value, electric charge, power of an electromagnetic radiation (e.g., light) etc. This parameter is one of the parameters of the nonlinear system and its value is influencing the dynamic operating regime of the system. Consequently, any change in the measured parameter will produce a change in the value of the corresponding system state parameter and finally will produce a change of the dynamic operating regime of the nonlinear dynamic system 1. The change of the dynamic operating regime (or regime) is characterized in an appropriate way by a block 2 that monitors the dynamics of the nonlinear system, and it is further converted into a primary output parameter. An interface subsystem 5 can be used to adapt the primary output to the application in hand, for instance by providing more power, or lower impedance etc.

According to the invention, the nonlinear dynamic system 1 can include any appropriate subsystem having any nonlinear input-to-output function and moreover can include any feddback loop or loops configuration that allows the development of a nonlinear dynamic operating regime exhibiting, with respect to the measured parameters, at least one region of chaotic regime, and that preferably exhibits several qualitatively different dynamic regions, the change in the dynamic regime being dependent on one or several parameters of the system. The nonlinear dynamic system 1, according to this invention, can be either a discrete-time system (i.e., its state variables are evolving discretely in time, according to a sampling of the time), or a continuous time system (i.e., its state variables are evolving continuously in time).

The change of the value of the measured parameter with a specific amount or higher, produces a significant change of the type of dynamic operating regime of the system, for instance makes the system change the operation from a chaotic regime to a periodic one, or vice versa, or from a stable regime to a chaotic one or vice versa, or from a stable regime to a torus-type regime, or from a periodic oscillating regime to another, or from one specific chaotic regime to another etc.

In order that the sensor device according to the present invention implements a characteristic with multiple thresholds (i.e. with several windows of sensing), it uses a nonlinear dynamic system whose bifurcation diagram exhibits transitions between qualitatively different dynamical regimes, preferably exhibiting two or more bifurcation points and which, under the nominal operation conditions (operating point of the sensing element) has the operating point in the vicinity of the boundary or boundaries of two or more different dynamical regimes, the change of the value of the sensed parameter causing the nonlinear regime to go through all the said different regimes.

The operaring regime characterization system 2 extracts useful information from the signal obtained from the non-linear dynamic system 1, and generates an appropriate signal that numerically characterizes the dynamic regime of the nonlinear system, thus giving a numerical indication on the value of the measured parameter(s).

The nonlinear dynamic system 1 may be based on a single elementary nolinear dynamic system configuration, including a single nonlinear sub-system, i.e. a sub-system exhibiting a nonlinear input-to-output function, moreover including one or several feedback loops.

Alternatively, the nonlinear dynamic system 1 may be composed by a set of multiple nonlinear systems in a network configuration, possibly all of the systems in the network being of the same type and exhibiting or not, when independent, a chaotic operating regime.

According to the invention, the discrete sensing element(s) 3 may be included in a feedback loop of the non-linear dynamic system, or may be connected to one of the inputs of the nonlinear sub-system, or may be included in the nonlinear sub-system to change its nonlinear input-to-output function.

In Figure 3 is shown a simple configuration of non-linear dynamic system (with or without embedded sensitivity). This configuration includes a nonlinear sub-system 7 and a simple feedback loop configuration.

The feedback loop is here a discrete time loop and includes a sample and hold circuit 8 driven by an appropriate timing circuit, the nonlinearity of the sub-system 7 being for instance, as schematically shown, in the shape of "N". The nonlinearity of the system can be of any type, without restriction, provided that it allows the developpement of a chaotic regime. For this purpose, the nonlinearity should in general be nonmonotonous. In the case exemplified in Figure 3, the sensor element 3 is connected outside the feedback loop and represents one of the circuit elements of the nonlinear system, such as a circuit element defining the nonlinearity. As an example, the sensor 3 in Figure 3 may be a resistor monitoring the ambient temperature.

Preferably according to the embodiment of Figure 3, the proximity chaotic sensor according to the present invention uses a nonlinear (chaotic) signal generator including a non-linear subsystem 7, whose operating regime is changed by the value of the impedance of the inductive, resistive or capacitive sensor 3 that is connected in the feedback circuit 8, the nonlinear sub-system 7 and the feedback loop 8 acting together and as a whole as a nonlinear signal generator, i.e., as the nonlinear dynamical system 1.

In a non-limiting example, the nonlinear dynamic sensor according to embodiment in Figure 3 of the present invention advantageously uses a sensing element 3 that is sensitive to the proximity of the external bodies, causing either a change of the value of an electrical resistance, or of an electrical capacitance, or of an electrical inductance, which value has an influence on the nonlinear dynamic regime, to realize the function of a proximity sensor, the whole including the sensing element and the said nonlinear dynamic system behaving as a whole and single system.

The characterisation may rely on the measurement of at least one global statistical parameter of the output signal or of any state-related signal from said dynamic non-linear system, on time windows long enough for they are representative for the statistics and hence for the dynamical regime.

## Claims

1. Method for measuring at least one parameter, comprising the steps of
sensing said parameter with at least one sensing element,
converting said sensed parameter into at least one other parameter corresponding to a parameter of a dynamical nonlinear system,
applying said converted parameter to said dynamical nonlinear system for generating a variable nonlinear dynamical regime of said dynamical nonlinear system, in relation to the change of said parameter,
deriving relevant information on the parameter to be measured by a global characterization of said change of the dynamic regime of said dynamical nonlinear system and
converting the characterization of said change into a primary output signal.

2. Method according to claim 1, wherein said characterisation relies on the measurement of at least one statistical parameter of the scalar or vectorial output signal or of any scalar or vectorial state-related signal from said dynamical nonlinear system, or of a combination of said signals, on time windows long enough for they are representative for the characterisation of the regime.

3. Method according to claim 2, wherein said measurement consist in determining a geometrical characteristic of the attractor corresponding to the dynamics.

4. Method according to claim 1, wherein said operating regime characterisation determines specific features patterns of the changed dynamic nonlinear regime.

5. Method according to one of the preceding claims, wherein a non-electric parameter is converted into an electric parameter that is an input or a state parameter of said dynamic nonlinear system.

6. Method according to one of the preceding claims, wherein the value of the sensed parameter is changed with a specific amount or higher in order to produce a change of the type of dynamic regime of the dynamic nonlinear system.

7. Method according to claim 6, wherein said dynamic nonlinear system has a bifurcation diagram exhibiting at least two quantitatively different regimes, or two bifurcation points and which, under the nominal operating conditions, has the operating point of said sensing element in the vicinity of at least one boundary between two different regimes, or in the vicinity of two bifurcation points, the change of the value of said sensed parameter causing the nonlinear regime to go through all said regions of the bifurcation diagram in order to implement a characteristic with multiples threshhold, i.e. several windows of sensing.

8. A device for carrying out the method according to claim 1, characterized in that it comprises:
a nonlinear dynamic system that operates in a chaotic dynamic mode, connected on one hand to
sensing means able to detect the changes of a at least one measured parameter and to transform it into a change of at least one parameter that is able to influence the dynamic regime of said nonlinear dynamic system and, on the other hand to
a dynamic regime characterisation system to extract useful information from at least one signal carrying information on the change of the dynamical regime of said non-linear dynamic system by said sensing means.

9. The device according to claim 8, wherein said non-linear dynamic system is any appropriate physical system.

10. The device according to claim 9, wherein said physical system is an electric one and said state parameter into which the measured parameter is transformed by said sensing element is either an impedance, inductance, capacitance or resistance or conductance parameter.

11. The device according to one of claims 8 to 10, wherein said sensing means are embedded or not in said nonlinear dynamic system.

12. The device according to one of claims 8 to 11, wherein said nonlinear dynamic system includes means having a nonlinear input-to-output function sub-system (7) with at least one feedback loop.

13. The device according to claim 12, wherein said feedback loop is a discrete time loop including a sample and hold circuit driven at a determined frequency by a timing circuit.

14. The device according to one of claims 8 to 13, wherein it further comprises a comparator means (4) to produce a binary or a multi-level logic output.

15. The device according to one of claims 8 to 14, wherein it further comprises an output interface (5) to adapt the primary output signal to a specific application.

16. The device according to one of claims 8 to 15, wherein it further comprises at least one annex subsystem/circuitry (6).
